# EUROPEAN PATENT APPLICATION

(11) **EP 4 509 872 A1**
(43) Date of publication of application: **19.02.2025**
(21) Application number: 23191938.2
(22) Date of filing: 17.08.2023
(51) Int. Cl.: G01S 7/487, G01S 7/497, G01S 17/42, G01S 17/931

(54) **LIDAR APPARATUS FOR A MOTOR VEHICLE**

(71) Applicant: Magna Electronics Sweden AB, 447 37 Vårgårda (SE)
(72) Inventor: HALLSTIG, Emil, 44737 Vårgårda (SE)
(74) Representative: Müller Verweyen

(57) **Abstract**

A lidar apparatus (10) for a motor vehicle comprises a light source (11) controlled to illuminate the environment of the motor vehicle, a detection device (12) comprising a plurality of detectors connected in parallel and adapted to capture light emitted by the light source (11) and reflected by the environment, and a data processing device (13) adapted to perform processing on the signal provided by the detection device (12) in order to obtain an image of the vehicle environment comprising distance information. The light source (11) is controlled to illuminate only a part of the environment visible by the detection device (12), and said data processing device (13) is adapted to read out and evaluate the signal from one or more detectors corresponding to the part of the environment not illuminated by the light source (11), in order to estimate at least one light scattering property.

## Description

The invention relates to a lidar or light detection and ranging apparatus for a motor vehicle, comprising a light source controlled to illuminate the environment of the motor vehicle, a detection device comprising a plurality of detectors connected in parallel and adapted to capture light emitted by the light source and reflected by the environment, and a data processing device adapted to perform processing on the signal provided by the detectors in order to obtain a depth image of the vehicle environment

A key metric for lidar apparatuses is the number of scanned points per second. In order to increase that number, a common method is to use several detectors in parallel, either multiple discrete lasers/detectors or, like in a flash solid state lidar, an array of detectors is used, similar to a camera imager. One major problem with such configurations is cross talk between detectors and especially the effect called blooming around retro reflectors. The strong return from a retro reflector is then scattered in the system ending up on adjacent detectors and causing false positive points around the retro reflector.

Strategies to design the hardware to reduce straylight are known, such as optimization of the anti-reflection coating and the mechanical aperture, darkening the lens edges and mounting structures, and custom design of the bandpass filter to optimize for wavelength and Chief Ray Angle.

S. K. Nayar et al., Fast Separation of Direct and Global Components of a Scene using High Frequency Illumination, ACM Transactions on Graphics, Volume 25, p 935-944, 01.07.2006, discloses a method of separating direct and global components of a scene. This approach uses an ordinary camera and a projector to illuminate the scene with different intensity frequencies.

Jonas Holmlund, Characterization and compensation of Stray light effects in Time of flight based range sensors, Master's Thesis, Umea University, 2013, discloses numerical simulations of stray light effects and using those simulated results for designing correction algorithms for blooming. For the time-of-flight cameras in this work, all the pixels were illuminated, it was therefor difficult to experimentally measure the stray light.

Other methods for stray light compensation in time-of-flight cameras are for example known from WO 2011/084799 A1 and US 2015/0122183 A1.

The problem underlying the present invention is to provide an improved compensation of effects caused by stray light.

The invention solves this problem with the features of the independent claims.

According to the invention, the light source is controlled to illuminate only a part of the environment visible by the detection device, and said data processing device is adapted to read out and evaluate the signal from one or more detectors corresponding to the part of the environment not illuminated by the light source, in order to estimate at least one light scattering property. According to the invention, several detectors are active, collecting signal, but part of the scene corresponding to one or more of these detectors is not illuminated by the light source. The one or more detectors that are not illuminated are nevertheless read out, in order to estimate at least one property of the scattering.

These one or more properties can be used in many ways, for example by reporting presence of blooming to a higher-level processing module, like an object detection module, in the data processing device, or by applying signal processing compensating for the blooming artefacts. Preferably, if the at least one estimated light scattering property fulfils at least one condition, for example exceeds a predetermined threshold, the presence of blooming is determined by the data processing device. Advantageously, based on the at least one estimated light scattering property, the data processing device applies signal processing compensating for light scattering artefacts.

As the stray light varies with many parameters like the scene, dirt on optics, aging, etc., it is preferred to continuously estimate the at least one stray light property during operation of the lidar apparatus, in order to run an algorithm on the data and compensate for stray light artefacts.

The light scattering property to be estimated may be the stray light origin in the environment, a point spread function, etc. Preferably, therefore, the data processing device is adapted to calculate a point spread function of the stray light based on the estimated light scattering properties. The point spread function preferably comprises at least one function for modelling the stray light intensity distribution, which may for example be a Gaussian function. The data processing device preferably is adapted to estimate the amplitude of a retro reflector signal, for example from the amplitude of the function modelling the light scattering intensity. This information is difficult to obtain otherwise, since the detectors corresponding to a retro reflector are usually saturated, so it is impossible to get the retro reflector signal strength from these. The data processing device preferably is adapted to estimate the position of a retro reflector signal from the position of the function modelling the light scattering intensity distribution. This information can be difficult to obtain if the position of the
retro reflector is outside the field of view of the Lidar apparatus. Also preferably, the data processing device is adapted to identify one or more stray light origins in the vehicle environment based on the estimated light scattering properties.

Different advantageous algorithms to compensate for stray light effects using the estimated properties of the scattering are possible, as will be explained in the following.

Preferably, the data processing device is adapted to identify and remove false positive signals from one or more detectors. This is especially advantageous in the case of a direct time of flight lidar apparatus, where stray light causes detectors adjacent to the bright or retro object to produce signals over the detection threshold, hence causing false positive points. A direct time of flight lidar apparatus is one where the distance information is obtained from measurement of the travel time of the light beam. For example, in a scanning lidar apparatus, points in the field of view are illuminated sequentially, and distance information is obtained from measuring the travel time of the light to and from a point in the field of view.

In other embodiments, the data processing device is preferably adapted to compensate range values of one or more detectors. This is especially advantageous in the case of an indirect time-of-flight camera apparatus, where stray light is affecting the range values. An indirect time of flight lidar apparatus is one where the vehicle environment is illuminated with intensity modulated light and a demodulating camera is used, and the distance information is obtained from measuring the phase shift between emitted and reflected light for every pixel of the camera sensor.

Preferably the light source is controlled to illuminate different parts of the environment in different time frames. Preferably, the different illuminated parts of the environment together compose at least 90% of the full field of view of the detection device. This has the advantage that essentially the full field of view can be detected with combining the different images corresponding to different time frames, where in every time frame the image comprises image parts which are not illuminated and can be used for the light scattering estimation. However, it is possible to reserve some pixels, or up to 5% or 10% of the full field-of view, for blooming detection, which are not part of the field-of-view.

The invention also provides a lidar method for a motor vehicle, comprising illuminating the environment of the motor vehicle, capturing light emitted into the environment and reflected by the environment with a detection device comprising a plurality of detectors connected in parallel, and performing data processing on the signal provided by the detection device in order to obtain an image of the vehicle environment comprising distance information. According to the invention, only a part of the environment visible by the detection device is illuminated, and the signal from one or more detectors corresponding to the part of the environment not illuminated is read out and evaluated, in order to estimate at least one light scattering property.

In the following the invention shall be illustrated on the basis of preferred embodiments with reference to the accompanying drawings, wherein:
- Fig. 1: shows a conventional lidar apparatus where the light source illuminates a spot corresponding to one detector;
- Fig. 2: shows a lidar apparatus where the light source illuminates a significant part of the full field of view;
- Fig. 3: shows an ideal image captured by the detection device in the case of a strong retro reflector;
- Fig. 4: shows a real image captured by the detection device in the case of a strong retro reflector, illustrating the effect of blooming;
- Fig. 5: shows a diagram illustrating a point spread function over one detector dimension for modelling light scattering;
- Fig. 6: shows a diagram illustrating the reflectivity of objects in the environment as an example of a scene;
- Fig. 7: shows a diagram illustrating different illuminations of the scene in different time frames;
- Fig. 8: shows the detector signal for full illumination of the field of view;
- Fig. 9: shows the detector signal for each of the different illuminations of Fig. 7;
- Fig. 10: shows the cross talk intensity due to light scattering and a corresponding fit curve;
- Fig. 11: shows the field of view of a coaxial type lidar apparatus with several detectors; and
- Figs. 12-14: show different embodiments of a flash type lidar apparatus with line illumination; and
- Figs. 15: illustrates a gray code illumination.

The vehicle mounted lidar apparatus 10 comprises a light source 11, in particular comprising one or more lasers, adapted to illuminate a field of view 21 in the vehicle environment, a detection device 12 adapted to capture light emitted by the light source 11 and reflected by objects in the vehicle environment, and a data processing device 13 connected to the detection device 12 and receiving signals from the detection device 12, and adapted to calculate a 3-dimensional image of the vehicle environment comprising distance information for every pixel of the image captured by the detection device 12. In this application, distance information means the distance of real world objects in the imaged vehicle environment to the detection device for each image pixel.

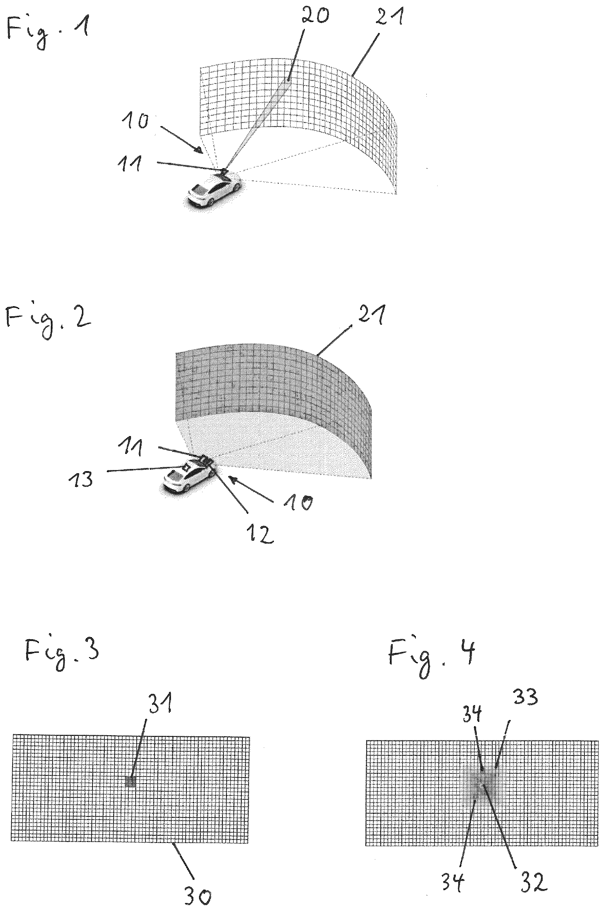

In a conventional lidar apparatus 10 shown in Figure 1, the light source illuminates only one spot 20 of the whole field of view 21 of the lidar apparatus 10 at a time, scanning sequentially over the field of view 21, which takes a long time.

Therefore, in a lidar apparatus 10 according to the invention shown in Figure 2, the light source 11 illuminates a significant part of the full field of view 21 of the lidar apparatus 10 at a time. Here, a significant part of the full field of view 21 means a plurality of spots 20 preferably corresponding to one ore more lines or columns of the detection device 12. Other illumination patterns than lines and/or columns are possible.

If a strong reflector is within the scene 30, as illustrated by the grey spot 31 in Figure 3, the detected image will in reality show blooming 33, see Figure 4, as some light is scattered to adjacent pixels/detectors (here about 13 detectors x 13 detectors). Conventionally, only the illuminated detector 32 is read out, or more precisely, the detector 32 which corresponds to the direct reflection of the illumination light beam. According to the invention, one or more (here two) detectors 34 that are not illuminated via direct reflection are read out to estimate the scattering properties.

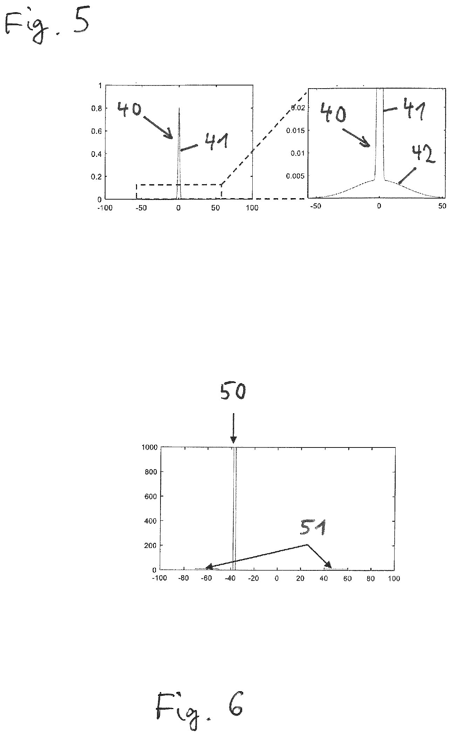

In the example described with respect to Figures 5 to 12, a one-dimensional system is assumed, where it should be understood that in reality, the scattering is usually symmetrical in two dimensions.

The scattering is mathematically described by a point spread function 40 (see diagram on the left side of Figure 5), in this example assumed to be a combination of two Gaussian functions 41, 42, one Gaussian function 41 very narrow with high amplitude for modelling the direct reflection, and one Gaussian function 42 very broad but with low amplitude for modelling the scattering. In Figures 5 and 8-10, the x-axis gives a detector dimension or image dimension in arbitrary units from -100 to +100. In Figure 5, the y-axis gives a model detection intensity in arbitrary units. The diagram on the right side of Figure 5 is enlarged on the y-axis as compared to the diagram on the left side, in order to make the low Gaussian function 42 visible.

The point spread function 40 is usually unknown and it is advantageous to estimate this point spread function to apply a compensation algorithm of the scattering.

Furthermore, in the present example a scene is assumed containing a small retro reflector 50 at x=-40 and two low reflectivity objects 51 at x=-60 and x=+50. This is illustrated in Figure 6 where the y-axis gives the reflectivity of objects in the environment in arbitrary units and the x-axis represents the one-dimensional field of view of the Lidar apparatus 10 corresponding to the detector dimension of Figures 5, 9-11. All objects 50, 51 are on the same distance from the Lidar apparatus 10.

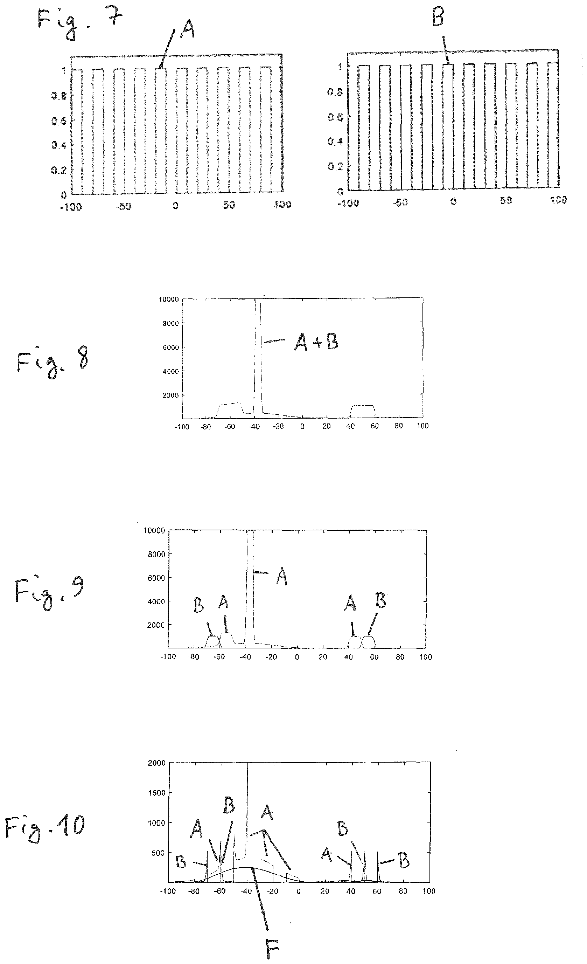

In the example of Figures 7-10, two different illuminations are emitted, denoted A and B, which are complementary and varying like in Figure 7. In Figure 7, the y-axis gives the illumination intensity of the light emitted by the light source 11 in arbitrary units, and the x-axis represents the one-dimensional field of view of the Lidar apparatus 10 as in Figure 6.

The illumination A shown on the left side of Figure 7 comprises vertical stripes arranged regularly with a distance to each other, and the illumination B shown on the right side of Figure 7 comprises vertical stripes arranged in the voids between the stripes of illumination A. Together the illuminations A and B illuminate the full field-of-view. However, the illuminations A and B are emitted in different time frames, for example alternating time frames, so that at any time, only one illumination A or B is present. More than two different illuminations are possible, and the form of each illumination my be different from vertical stripes, like horizontal stripes, squares arranged in a chessboard pattern, etc.

Figure 8 shows the detector signal, i.e. the detection intensity over the one-dimensional detector dimension like in Figure 5, for full illumination of the field of view, corresponding to the integrated intensity over two consecutive time frames comprising illuminations A and B. The full illumination graph of Figure 8 depicts what would be detected at this specific range slot if the complete field of view was illuminated through a single illumination A+B.

By instead using the two different illuminations A and B in different time frames, the two detection signals A, B corresponding to illuminations A, B of Figure 7, respectively, are as shown in Figure 9. As for the Lidar apparatus 10 the signal is sampled over time, this signal is for the time corresponding to the distance to the assumed objects 50, 51.

By analyzing signal from the detectors that are not illuminated, according to the invention, the cross talk intensity (or simply cross talk) can be estimated for each of the different illuminations, as shown in Figure 10. In order to compensate for the straylight, different curves or an assumed point spread function 40, like the one shown in Figure 5, can be fitted to this cross talk intensity. In Figure 10, the cross talk components for illuminations A and B are shown and a simple polynomial F fitted to the crosstalk with illumination A. This fitted curve F is then an estimate of the wide low amplitude part 42 of the point spread function 40 (see Figure 5).

Furthermore, the amplitude of the curve F gives an indication of the amplitude of the retro reflector 50 signal. The detectors corresponding to the retro reflector 50 are usually saturated, so it is impossible to get the retro reflector signal strength from these. The position of the curve F indicates where the retro reflector is, which could also be outside the field of view of the Lidar apparatus 10.

The amplitude of the cross talk and/or the fitted curve F can then be compared to a threshold used for detecting a point or object, in order to see where there probably are false positives caused by the retro reflector 50. Where the amplitude of the cross talk is high compared to the threshold, the points should either be marked as possible false positives or removed.

If there are objects in the scene that are closer or further away than the retro reflector 50, these objects are normally less disturbed by the blooming. However, but by doing the above described characterization of the scatter or stray light objects, the removal of false positives can be done more precisely and hence not remove actual objects at same range as the retro reflector 50 or close to that range, hence avoiding false negatives caused by the algorithm.

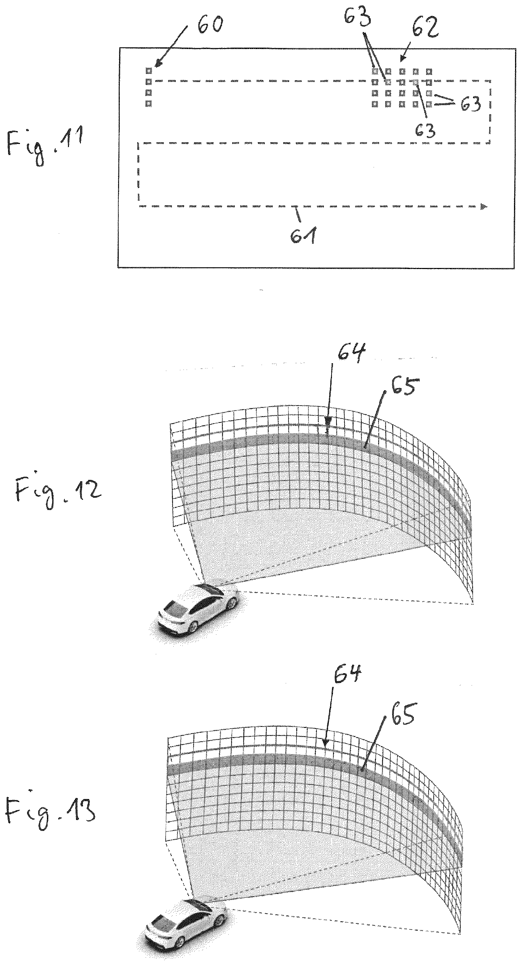

In the following several embodiments relating to different illumination schemes are described with reference to Figures 11 to 14.

Figure 11 relates to a coaxial lidar apparatus 10, i.e. with a plurality of coaxially oriented laser light sources 11, and several detectors in the detection device 12. More specifically, a plurality, here four, of discrete detectors are provided in the lidar apparatus 10, i.e., in the detection device 12 thereof, and a mechanism like a moving mirror or prism to scan the field of view, following a scan pattern which is illustrates by the dashed line 61. The four spots at 60 represent the field of view in the scene of the four detectors. The four detectors 60 follow the scan patters 61 over the field of view of the lidar apparatus 10.

Conventionally one or more lasers are fired at every scan direction to maximize the number of points. In order to detect if there is scattering in the scene, however, it is worth to trade off the number of points and the one or more lasers are not always fired for all the multiple, here four, detectors. I.e., at some (or all) scan positions, one or more detectors are not illuminated but still read out to detect the straylight components. This is indicted in Figure 11 at 62 indicated by selected detectors 63 which are not illuminated but nevertheless read out. Hence the one or more detectors 63 for which the one or more lasers 11 are not fired can detect the scattering or cross talk components. At a first level to indicate to the system that cross talk is present and at a next level in order to compensate range readings and/or remove false positives in the resulting point cloud.

Figure 12 to 15 relate to different embodiments of a flash type lidar apparatus 10.

In Figure 12, two or more detector lines are read out, but only one line, or generally a smaller number of lines, are illuminated. I.e., at some (or all) scan positions at least one extra row is read out but not illuminated, in Figure 12 indicated by the detector line 64 just above the illuminated line 65. In a practical example, an array detector device 12 and an addressable illumination light source 11, e.g. an addressable VCSEL array or a laser line scanned by some mechanism, may be provided, so that the laser 11 only illuminate parts of the detector field of view, for example one row of detector pixels. By reading out both the illuminated row of pixels and at least one separate row that is not illuminated, properties of stray light can be estimated. This can be done for every row or only at specific rows/times, depending on for example bandwidth limits, processing capabilities, how often stray light properties have to be estimated, etc.

In the embodiment of Figure 13, only one line 64 is read out, but the line illumination 65 is altered in another direction. For example, if only one line of the detector array 12 can be read out at a time, the illumination can be moved so first the row is illuminated and then one or more different read outs are done while illuminating a different part of the field of view. This can be done for every row or only at specific rows or times, depending on for example bandwidth limits, processing capabilities, how often stray light properties have to be estimated, etc.

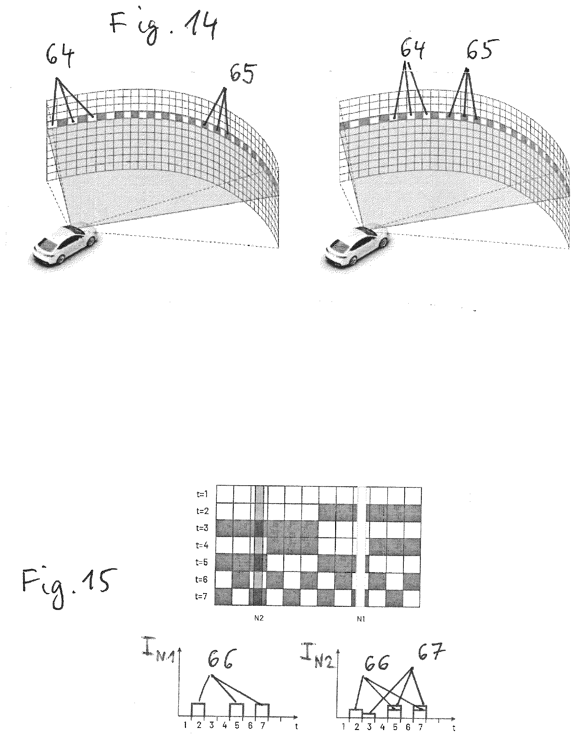

In the embodiment of Figure 14, only one line is read out, but the parts of the line that are illuminated are altered. For example, if only one line of the detector array 12 can be read out at a time, the illumination is varied to illuminate different parts of that row, so that some detectors 65 are illuminated, and some 64 are not, see Figure 14. Hence, the detector row is read out twice, one time per illumination. In this embodiment, only part 65 of the line is illuminated, and the parts 65 illuminated are varied, for example in two subsequent read outs or time frames, so that half of the detectors 65 are illuminated in first read out (left side of Fig. 14) and the remaining half in next read out (right side of Fig. 14). In Figure 14 the detectors 64 are not illuminated.

If the illumination can be even more flexible in several segments, they can be illuminated in sequence to provide more information about the scattering properties and the origin of the scattered light. One possibility to use for the illumination is the so called Gray code. Illumination in gray code allows a better position of stray light components.

Assume that different illumination patterns are used over time, in the upper part of Figure 15 seven different read outs (t=1 to t=7), where grey squares indicate illumination "on" and white squares indicate illumination "off". In this example, there are two objects in the scene: N1 being a retro reflector (light column) and N2 being a dark object (gray column) .

The diagrams in the lower part of Figure 15 show the detected intensity variation over time for N1 (left side) and N2 (right side), where the graphs 66 indicate light from the retro reflector and the graphs 67 indicate light from the dark object. The code over time then describes the position so the dark object is at position/code [3,5,7] and retro at [2,5,7] . Note that the retro reflector is assumed to provide some light also for I_{N2} due to scattering. By analyzing the difference between I_{N2} and I_{N1}, it is possible not only to detect that there is some light in I_{N2} from the retro reflector, but also to see the origin of that light, hence the code [2,5,7] is unique.

## Claims

1. A lidar apparatus (10) for a motor vehicle, comprising a light source (11) controlled to illuminate the environment of the motor vehicle, a detection device (12) comprising a plurality of detectors connected in parallel and adapted to capture light emitted by the light source (11) and reflected by the environment, and a data processing device (13) adapted to perform processing on the signal provided by the detection device (12) in order to obtain an image of the vehicle environment comprising distance information, **characterized in that** the light source (11) is controlled to illuminate only a part of the environment visible by the detection device (12), and said data processing device (13) is adapted to read out and evaluate the signal from one or more detectors corresponding to the part of the environment not illuminated by the light source (11), in order to estimate at least one light scattering property.

2. The lidar apparatus (10) as claimed in any one of the preceding claims, **characterized in that**, if the estimated light scattering property fulfils at least one condition, the presence of blooming is determined by the data processing device (13).

3. The lidar apparatus (10) as claimed in any one of the preceding claims, **characterized in that**, based on the at least one estimated light scattering property, the data processing device (13) applies signal processing compensating for light scattering artefacts.

4. The lidar apparatus (10) as claimed in any one of the preceding claims, **characterized in that** the data processing device (13) is adapted to calculate a point spread function (40) of the stray light based on the at least one estimated light scattering property.

5. The lidar apparatus (10) as claimed in claim 4, **characterized in that** the point spread function (40) comprises at least a function (42) for modelling the light scattering intensity distribution.

6. The lidar apparatus (10) as claimed in any one of the preceding claims, **characterized in that** the data processing device (13) is adapted to estimate the amplitude of a retro reflector signal (41).

7. The lidar apparatus (10) as claimed in claim 5 or 6, **characterized in that** the data processing device (13) is adapted to estimate the position of a retro reflector signal (41) from the position of the function (42) modelling the light scattering intensity.

8. The lidar apparatus (10) as claimed in any one of the preceding claims, **characterized in that** the data processing device (13) is adapted to identify one or more stray light origins in the vehicle environment based on the at least one estimated light scattering property.

9. The lidar apparatus (10) as claimed in any one of the preceding claims, **characterized in that** the data processing device (13) is adapted to identify and remove false positive signals from one or more detectors based on the at least one estimated light scattering property.

10. The lidar apparatus (10) as claimed in any one of the preceding claims, **characterized in that** the lidar apparatus (10) is a direct time-of-flight lidar apparatus.

11. The lidar apparatus (10) as claimed in any one of the preceding claims, **characterized in that** the data processing device (13) is adapted to compensate range values of one or more detectors based on the at least one estimated light scattering property.

12. The lidar apparatus (10) as claimed in any one of the preceding claims, **characterized in that** the lidar apparatus (10) is an indirect time-of-flight camera apparatus.

13. The lidar apparatus (10) as claimed in any one of the preceding claims, **characterized in that** the light source (11) is controlled to illuminate different parts (A, B) of the environment in different time frames.

14. The lidar apparatus (10) as claimed in claim 13, **characterized in that** the different illuminated parts (A, B) of the environment together compose at least 90% of the full field of view of the detection device (12).

15. A lidar method for a motor vehicle, comprising illuminating the environment of the motor vehicle, capturing light emitted into the environment and reflected by the environment with a detection device (12) comprising a plurality of detectors connected in parallel, and performing data processing on the signal provided by the detection device (12) in order to obtain an image of the vehicle environment comprising distance information, **characterized in that** only a part of the environment visible by the detection device (12) is illuminated, and reading out and evaluating the signal from one or more detectors corresponding to the part of the environment not illuminated, in order to estimate at least one light scattering property.
